# EUROPEAN PATENT SPECIFICATION

(11) **EP 4 250 079 B1**
(45) Date of publication and mention of the grant of the patent: **18.02.2026**
(21) Application number: 22187164.3
(22) Date of filing: 27.07.2022
(51) Int. Cl.: G06F 3/0483, G06F 40/106, G06F 40/197

(54) **INFORMATION PROCESSING SYSTEM AND PROGRAM**
INFORMATIONSVERARBEITUNGSSYSTEM UND PROGRAMM
SYSTÈME DE TRAITEMENT D'INFORMATIONS ET PROGRAMME

(30) Priority: 23.03.2022 JP 2022047079
(43) Date of publication of application: 27.09.2023
(73) Proprietor: FUJIFILM Business Innovation Corp., Minato-ku Tokyo (JP)
(72) Inventor: HIRATA, Motoharu, Yokohama-shi (JP)
(74) Representative: Haseltine Lake Kempner LLP

(56) References cited:
- US-A1- 2014 033 088
- US-B1- 10 430 504

## Description

### Background

### (i) Technical Field

The present disclosure relates to information processing systems and programs.

### (ii) Related Art

In the related art, there is a technique for displaying a difference between versions of a created electronic document. For example, Japanese Unexamined Patent Application Publication No. 2009-116674 discloses a known technique involving arranging and displaying multiple images of different versions of an electronic document to facilitate a comparison process for a user.

US 2014/033088 A1 concerns an electronic content change tracking apparatus.

US 10430504 B1 concerns a method for presenting document versions.

### Summary

In this case, a display space for arranging and displaying the multiple images has to be ensured.

Accordingly, it is an object of the present disclosure to display a difference between versions of an electronic document within a smaller display space, as compared with a case where images of different versions are to be displayed in an arranged fashion.

Aspects of the present invention are defined in the accompanying independent claims. Advantageous optional features are defined in the dependent claims.

According to a first aspect of the present disclosure, there is provided an information processing system comprising a processor configured to: receive a first input operation performed by a user on a thumbnail image of an electronic document displayed on a display; perform control including enlarging and displaying an image of a predetermined page included in one or more pages constituting the electronic document and an operation unit image on the display such that the image of the predetermined page and the operation unit image are displayed larger in size than the thumbnail image, the operation unit image at least including an operation image that receives a second input operation for displaying the image of the predetermined page for each version; and perform control including superimposing the image of the predetermined page of a first version and the image of the predetermined page of a second version on each other and enlarging and displaying the superimposed image on the display in accordance with the second input operation performed on the operation image.

According to a second aspect of the present disclosure, in the information processing system according to the first aspect, the processor is configured to: receive an operation for selecting the thumbnail image as the first input operation; and perform control including superimposing a preview image of the predetermined page of the first version and a preview image of the predetermined page of the second version on each other and enlarging and displaying the superimposed preview image on the display in accordance with the second input operation performed on the operation image.

According to a third aspect of the present disclosure, in the information processing system according to the second aspect, the processor is configured to receive an operation for superimposing a cursor on the thumbnail image as the operation for selecting the thumbnail image, the cursor moving in the display in conjunction with an input operation performed by the user.

According to a fourth aspect of the present disclosure, in the information processing system according to the second aspect, the processor is configured to perform control including enlarging and displaying the operation image on the display if a version of the electronic document opened in accordance with an input operation performed by the user is different from a version corresponding to previous enlarged display on the display.

According to a fifth aspect of the present disclosure, in the information processing system according to the second aspect, the processor is configured to perform control including not displaying the operation image on the display if a version of the electronic document enlarged and displayed on the display in accordance with an input operation performed by the user is identical to a version corresponding to previous enlarged display on the display or if the electronic document has never been enlarged and displayed on the display in accordance with the input operation.

According to a sixth aspect of the present disclosure, in the information processing system according to the second aspect, the processor is configured to perform control including superimposing the preview image of the predetermined page of the first version and the preview image of the predetermined page of the second version on each other and enlarging and displaying the superimposed preview image on the display in a mode in which a difference between the versions is identifiable.

According to a seventh aspect of the present disclosure, in the information processing system according to the sixth aspect, the processor is configured to perform control including varying a display mode for each of the preview image of the predetermined page of the first version and the preview image of the predetermined page of the second version and enlarging and displaying the preview images on the display, the display mode serving as the mode in which the difference between the versions is identifiable.

According to an eighth aspect of the present disclosure, in the information processing system according to the seventh aspect, the processor is configured to: receive the second input operation performed on any position in a region formed between a first text character or symbol and a second text character or symbol that are displayed in the operation image, the first text character or symbol indicating the predetermined page of the first version, the second text character or symbol indicating the predetermined page of the second version; and vary the display mode in accordance with the position on which the second input operation is performed.

According to a ninth aspect of the present disclosure, in the information processing system according to the eighth aspect, wherein the processor is configured to: make the display mode for the preview image of the predetermined page of the first version clear and the display mode for the preview image of the predetermined page of the second version unclear as the position on which the second input operation is performed approaches the first text character or symbol; and make the display mode for the preview image of the predetermined page of the second version clear and the display mode for the preview image of the predetermined page of the first version unclear as the position on which the second input operation is performed approaches the second text character or symbol.

According to a tenth aspect of the present disclosure, in the information processing system according to the ninth aspect, the processor is configured to make the display mode clear by reducing display transparency of each of the preview image of the predetermined page of the first version and the preview image of the predetermined page of the second version and make the display mode unclear by increasing the display transparency.

According to an eleventh aspect of the present disclosure, in the information processing system according to the ninth aspect, a linear symbol disposed between the first text character or symbol and the second text character or symbol is displayed in the region, and the second input operation is performed on any position of the linear symbol.

According to a twelfth aspect of the present disclosure, in the information processing system according to the second aspect, the processor is configured to perform control including superimposing the preview image of the page of a current version and the preview image of the page of a version previously opened in accordance with an input operation performed by the user on each other and enlarging and displaying the superimposed preview image on the display, the preview image of the page of the current version serving as the preview image of the predetermined page of the first version, the preview image of the page of the version previously opened in accordance with the input operation performed by the user serving as the preview image of the predetermined page of the second version.

According to a thirteenth aspect of the present disclosure, in the information processing system according to the twelfth aspect, the processor is configured to perform control including superimposing the preview image of the predetermined page of the first version and the preview image of the page of the version previously opened in accordance with the input operation performed by the user as the preview image of the predetermined page of the second version and enlarging and displaying the superimposed preview image on the display when a third input operation is performed by the user.

According to a fourteenth aspect of the present disclosure, in the information processing system according to the second aspect, the processor is configured to perform control including arranging the preview image of the predetermined page of the first version and the preview image of the predetermined page of the second version side-by-side and enlarging and displaying the preview images on the display in accordance with a fourth input operation performed by the user.

According to a fifteenth aspect of the present disclosure, there is provided a program causing a computer to execute a process, the process comprising: receiving a first input operation performed by a user on a thumbnail image of an electronic document displayed on a display; performing control including enlarging and displaying an image of a predetermined page included in one or more pages constituting the electronic document and an operation unit image on the display such that the image of the predetermined page and the operation unit image are displayed larger in size than the thumbnail image, the operation unit image at least including an operation image that receives a second input operation for displaying the image of the predetermined page for each version; and performing control including superimposing the image of the predetermined page of a first version and the image of the predetermined page of a second version on each other and enlarging and displaying the superimposed image on the display in accordance with the second input operation performed on the operation image.

The first aspect of the present disclosure may provide an information processing system that enables displaying a difference between versions of an electronic document within a smaller display space, as compared with a case where images of different versions are to be displayed in an arranged fashion.

The second aspect of the present disclosure may enable displaying a difference between versions of an electronic document within a smaller display space, as compared with a case where images of different versions are to be displayed in an arranged fashion, since the images of the different versions are displayed in a superimposed fashion.

According to the third aspect of the present disclosure, the user may simply perform an operation for superimposing the cursor over the thumbnail image of the electronic document and an operation on the operation image to readily ascertain the difference between versions of the electronic document from a single image obtained as a result of superimposing the two preview images on each other.

According to the fourth aspect of the present disclosure, the operation image is displayed as appropriate, so that whether or not a version has been added is ascertainable at a glance.

According to the fifth aspect of the present disclosure, the operation image is displayed as appropriate, so that whether or not a version has been added is ascertainable at a glance.

According to the sixth aspect of the present disclosure, the preview images respectively indicating the two versions are displayed in a mode in which the difference between the versions is identifiable, whereby the difference between the images is readily ascertainable.

According to the seventh aspect of the present disclosure, the difference is identifiable at a glance in accordance with a change in the display modes of the two versions.

According to the eighth aspect of the present disclosure, the user may readily ascertain the difference between the two versions by simply performing the second input operation on any position in the region formed between the text characters or symbols of the respective versions displayed in the operation image.

According to the ninth aspect of the present disclosure, the user may ascertain the difference between the two versions at a glance by simply performing the second input operation on any position in the region formed between the text characters or symbols of the respective versions displayed in the operation image.

According to the tenth aspect of the present disclosure, the user may readily ascertain the difference between the two versions by simply viewing the display transparency that changes in accordance with the second input operation performed on any position in the region formed between the text characters or symbols of the respective versions displayed in the operation image.

According to the eleventh aspect of the present disclosure, the difference between the two versions is readily ascertainable by simply viewing the display mode that changes in accordance with the second input operation performed on the linear symbol displayed in the operation image.

According to the twelfth aspect of the present disclosure, the version previously opened by the user and the current version may be readily compared with each other even if at least one version has been added between the version previously opened by the user and the current version.

According to the thirteenth aspect of the present disclosure, if at least one version has been added between the version previously opened by the user and the current version, a comparison between the version previously opened by the user and the current version and a comparison between the most recent version and the current version may be freely selected.

According to the fourteenth aspect of the present disclosure, in addition to enlarging and displaying the preview images of the two versions in a superimposed fashion, it is possible to select whether to enlarge and display the preview images in an arranged fashion.

The fifteenth aspect of the present disclosure may provide a program that enables displaying a difference between versions of an electronic document within a smaller display space, as compared with a case where images of different versions are to be displayed in an arranged fashion.

### Brief Description of the Drawings

Exemplary embodiments of the present disclosure will be described in detail based on the following figures, wherein:
Fig. 1 illustrates an example of the overall configuration of an information processing system according to an exemplary embodiment;
Fig. 2 illustrates a hardware configuration of a user terminal serving as an information processing apparatus according to an exemplary embodiment;
Fig. 3 illustrates a functional configuration of a controller of the user terminal;
Fig. 4 illustrates a functional configuration of a controller of a management server in a case where the management server performs control for displaying a workspace on a display of the user terminal;
Figs. 5A and 5B are flowcharts illustrating the flow of processing by the user terminal;
Figs. 6A and 6B are flowcharts illustrating the flow of processing by the management server in a case where the management server performs control for displaying the workspace on the display of the user terminal;
Fig. 7 illustrates a specific example of the workspace displayed on the display of the user terminal;
Fig. 8 illustrates a specific example of the workspace displayed on the display of the user terminal;
Fig. 9 illustrates a specific example of the workspace displayed on the display of the user terminal;
Fig. 10 illustrates a specific example of the workspace displayed on the display of the user terminal;
Fig. 11 illustrates a specific example of the workspace displayed on the display of the user terminal; and
Fig. 12 illustrates a specific example of the workspace displayed on the display of the user terminal.

### Detailed Description

Exemplary embodiments of the present disclosure will be described in detail below with reference to the appended drawings.

### Configuration of Information Processing System

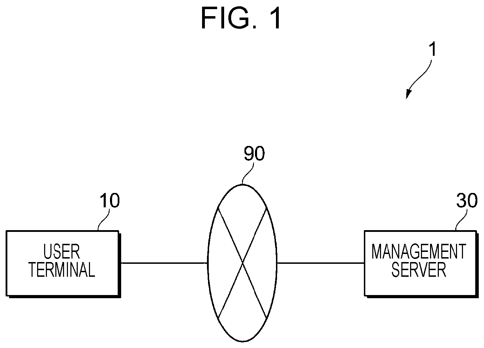

Fig. 1 illustrates an example of the overall configuration of an information processing system 1 according to an exemplary embodiment.

The information processing system 1 is configured by connecting a user terminal 10 and a management server 30 to each other via a network 90. The network 90 is, for example, a local area network (LAN) or the Internet.

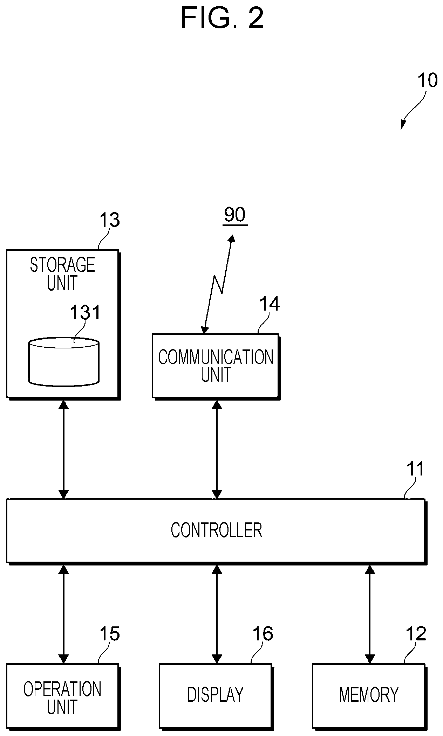

The user terminal 10 is an information processing apparatus, such as a personal computer, a smartphone, or a tablet terminal, operated by a user. The user terminal 10 displays an operation screen (referred to as "workspace" hereinafter) of so-called file handling software on a display 16 (see Fig. 2), and displays a thumbnail image of an electronic document to be handled by the user on the workspace. The electronic-document thumbnail image displayed on the workspace is a so-called "shortcut", and the electronic document itself is stored in a database. Multiple workspaces may be created and may each be displayed on the display 16 in accordance with an input operation performed by the user. Furthermore, the workspace may be shared with another user via the network 90.

The user terminal 10 receives a first input operation performed by the user on the electronic-document thumbnail image displayed on the workspace. When the user terminal 10 receives the first input operation, the user terminal 10 enlarges and displays an image of a predetermined page included in one or more pages constituting the electronic document and an operation image for receiving a second input operation performed by the user on the workspace such that these images are displayed larger in size than the electronic-document thumbnail image.

In accordance with the second input operation, the user terminal 10 superimposes the image of the predetermined page of a first version and the image of the predetermined page of a second version on each other, and enlarges and displays the superimposed image on the workspace in a mode in which the difference between the versions is identifiable. Moreover, the user terminal 10 may also perform control for arranging the image of the predetermined page of the first version and the image of the predetermined page of the second version side-by-side and enlarging and displaying the images on the workspace in a mode in which the difference between the versions is identifiable.

With regard to the term "version", the numerical value thereof increases by one every time the electronic document is saved and closed. The term "first version" does not necessarily imply that it is the original version, but implies that it is a predetermined version. The term "second version" also does not necessarily imply that it is a version subsequent to the "first version", but implies that it is simply a predetermined version different from the "first version". A "predetermined version" may be, for example, a version designated in accordance with an input operation performed by the user or a version preliminarily set as a default value without being dependent on an input operation performed by the user. These types of processing executed by the user terminal 10 will be described in detail later.

The management server 30 is an information processing apparatus serving as a server that manages the entire information processing system 1. The management server 30 is capable of performing at least a part of the aforementioned processing executed by the user terminal 10. Specifically, the management server 30 is capable of performing control for displaying the workspace on the display 16 of the user terminal 10 and control for displaying the electronic-document thumbnail image on the workspace.

Furthermore, when the user terminal 10 receives the first input operation, the management server 30 is capable of performing control for enlarging and displaying the image of the predetermined page included in one or more pages constituting the electronic document and the operation image for receiving the second input operation on the workspace such that these images are displayed larger in size than the electronic-document thumbnail image.

In accordance with the second input operation, the management server 30 is capable of performing control for superimposing the image of the predetermined page of the first version and the image of the predetermined page of the second version on each other and enlarging and displaying the superimposed image on the workspace in a mode in which the difference between the versions is identifiable. Moreover, the management server 30 is also capable of performing control for arranging the image of the predetermined page of the first version and the image of the predetermined page of the second version side-by-side and enlarging and displaying the images on the workspace in a mode in which the difference between the versions is identifiable. These types of processing executed by the management server 30 will be described in detail later.

The configuration of the information processing system 1 described above is an example and may be of any type so long as the entire information processing system 1 has the function for implementing the above-described processing. Thus, the function for implementing the above-described processing may partially or entirely be implemented in a distributed fashion or a cooperative fashion within the information processing system 1. Specifically, as mentioned above, the function of the user terminal 10 may partially or entirely be the function of the management server 30, and the function of the management server 30 may partially or entirely be the function of the user terminal 10. Moreover, the function of each of the user terminal 10 and the management server 30 constituting the information processing system 1 may partially or entirely be transferred to, for example, another server (not shown). Accordingly, this facilitates the processing in the entire information processing system 1 and also enables complementation of the processing.

### Hardware Configuration of User Terminal

Fig. 2 illustrates a hardware configuration of the user terminal 10 serving as an information processing apparatus according to this exemplary embodiment.

The user terminal 10 has a controller 11, a memory 12, a storage unit 13, a communication unit 14, an operation unit 15, and a display 16. These units are connected to one another by, for example, a data bus, an address bus, or a peripheral component interconnect (PCI) bus.

The controller 11 is a processor that executes various types of software, such as an operating system (OS) (basic software) and application software, to control the function of the user terminal 10. The controller 11 is constituted of, for example, a central processing unit (CPU). The memory 12 is a storage region that stores each type of software and data to be used for executing the software, and is used as a work area during computing. The memory 12 is constituted of, for example, a random access memory (RAM).

The storage unit 13 is a storage region that stores input data to be input to each type of software and output data to be output from each type of software. The storage unit 13 is constituted of, for example, a hard disk drive (HDD), a solid state drive (SSD), or a semiconductor memory used for storing programs and various types of setting data. In the storage unit 13, for example, a document database (DB) 131 having stored therein each version of the electronic document to be displayed as a thumbnail image on the workspace is stored as a database that stores various types of information.

The communication unit 14 exchanges data with the management server 30 and the outside via the network 90.

The operation unit 15 is constituted of, for example, a keyboard, a mouse, a mechanical button, and a switch and receives an input operation. Furthermore, the operation unit 15 has an operation image displayed on the display 16. The operation unit 15 also includes a touch sensor that constitutes a touchscreen together with the display 16. The display 16 is constituted of, for example, a liquid crystal display or an electro-luminescence (EL) display used for displaying information, and displays image data and text data. The display 16 also displays a user interface.

### Hardware Configuration of Management Server

The hardware configuration of the management server 30 includes components identical to those of the hardware configuration of the user terminal 10 shown in Fig. 2. Specifically, the management server 30 includes a controller, a memory, a storage unit, a communication unit, an operation unit, and a display that have functions similar to those of the controller 11, the memory 12, the storage unit 13, the communication unit 14, the operation unit 15, and the display 16 in Fig. 2. The illustration and the description of these units included in the management server 30 are omitted.

### Functional Configuration of Controller of User Terminal

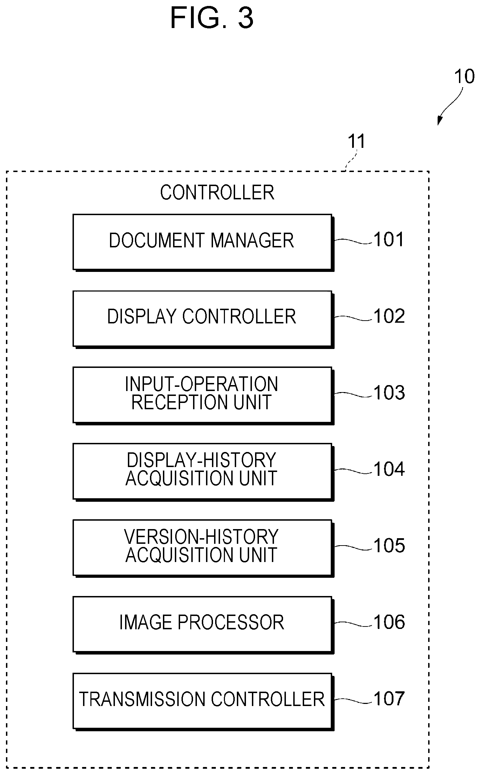

Fig. 3 illustrates a functional configuration of the controller 11 of the user terminal 10.

The controller 11 of the user terminal 10 functions as a document manager 101, a display controller 102, an input-operation reception unit 103, a display-history acquisition unit 104, a version-history acquisition unit 105, an image processor 106, and a transmission controller 107.

The document manager 101 stores and manages at least one electronic document in a database. In detail, the document manager 101 stores and manages at least one electronic document displayable as a thumbnail image on the workspace in the document DB 131 of the storage unit 13. The type of electronic document stored in the document DB 131 is not particularly limited and may be, for example, a text document having a page concept and created using document-creation application software.

The at least one electronic document stored in the document DB 131 is associated with identification information (e.g., document ID) for uniquely identifying the electronic document, history-related information (referred to as "display history information" hereinafter) displayed in an enlarged fashion on the workspace, and version-history-related information (referred to as "version history information" hereinafter). The display history information is associated with information (e.g., time information) indicating the timing at which an input operation has been performed for enlarging and displaying a preview image of at least one page constituting the electronic document on the workspace and information (e.g., user ID) for uniquely identifying a user who has performed the input operation. The version history information is associated with a version number (e.g., "1" for the original version and "2" for the subsequent version) of the electronic document and information (i.e., time information) indicating the timing at which the version has been changed. Accordingly, it is possible to manage which user has given a command for enlarging and displaying a preview image of which page of which version at what timing on the workspace.

The display controller 102 performs control for causing the display 16 (see Fig. 2) to display each type of information. For example, the display controller 102 performs control for causing the display 16 to display a workspace. The workspace may be displayed on the display 16 by activating user-oriented dedicated application software preliminarily installed in the user terminal 10 or by accessing a user-oriented dedicated website.

The display controller 102 performs control for displaying a designated electronic-document thumbnail image on the workspace. Furthermore, the display controller 102 performs control for enlarging and displaying an image of a predetermined page included in one or more pages constituting an electronic document selected in accordance with a first input operation performed by the user and an operation image for receiving a second input operation performed by the user on the workspace such that these images are displayed larger in size than the electronic-document thumbnail image.

Moreover, if the version of the selected electronic document is different from the version corresponding to the previous enlarged display of the electronic document on the workspace, the display controller 102 may perform control for enlarging and displaying the operation image on the workspace. If the version of the selected electronic document is identical to the version corresponding to the previous enlarged display of the electronic document on the workspace, the display controller 102 may perform control for not displaying the operation image on the workspace. If there is no history indicating that the control for enlarging and displaying the selected electronic document on the workspace has been performed, the display controller 102 may similarly perform the control for not displaying the operation image on the workspace.

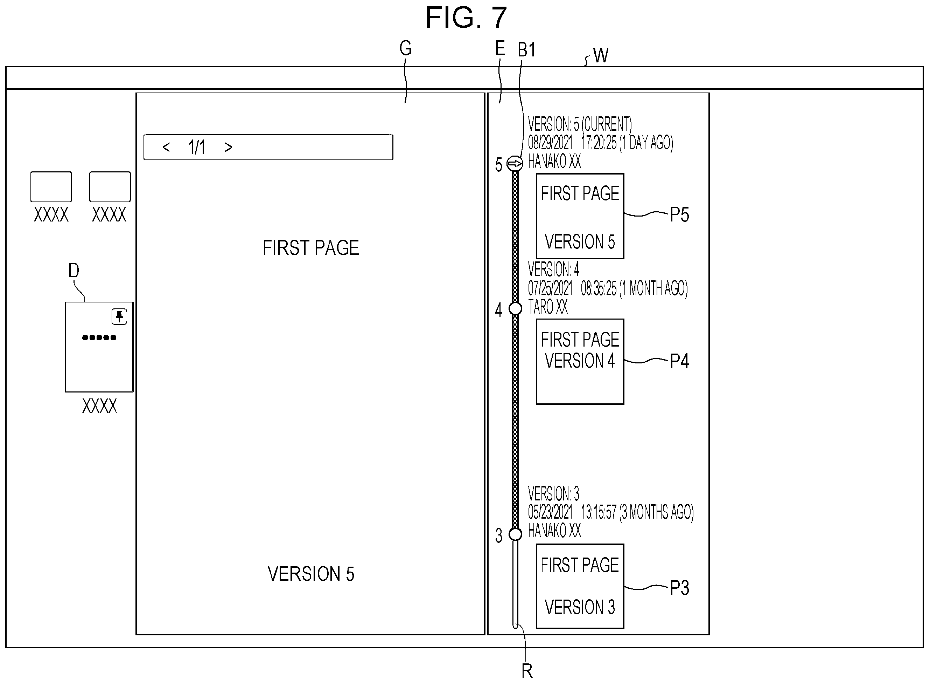

Furthermore, in accordance with the second input operation performed by the user, the display controller 102 performs control for superimposing the preview image of the predetermined page of a first version and the preview image of the predetermined page of a second version on each other and enlarging and displaying the superimposed preview image on the workspace in a mode in which the difference between the versions is identifiable. For example, the expression "a mode in which the difference between the versions is identifiable" refers to a state where the display mode is varied between the preview image of the predetermined page of the first version and the preview image of the predetermined page of the second version or a state where the different areas are overlapped when the preview images are superimposed on each other and these areas are made unclear as if they are blocked. An example of the state where the "display mode is varied" between the preview images includes displaying the preview images in a clear mode and an unclear mode. Specific examples of a case where the display mode is varied between the preview image of the predetermined page of the first version and the preview image of the predetermined page of the second version will be described later with reference to specific examples in Fig. 7 and onward.

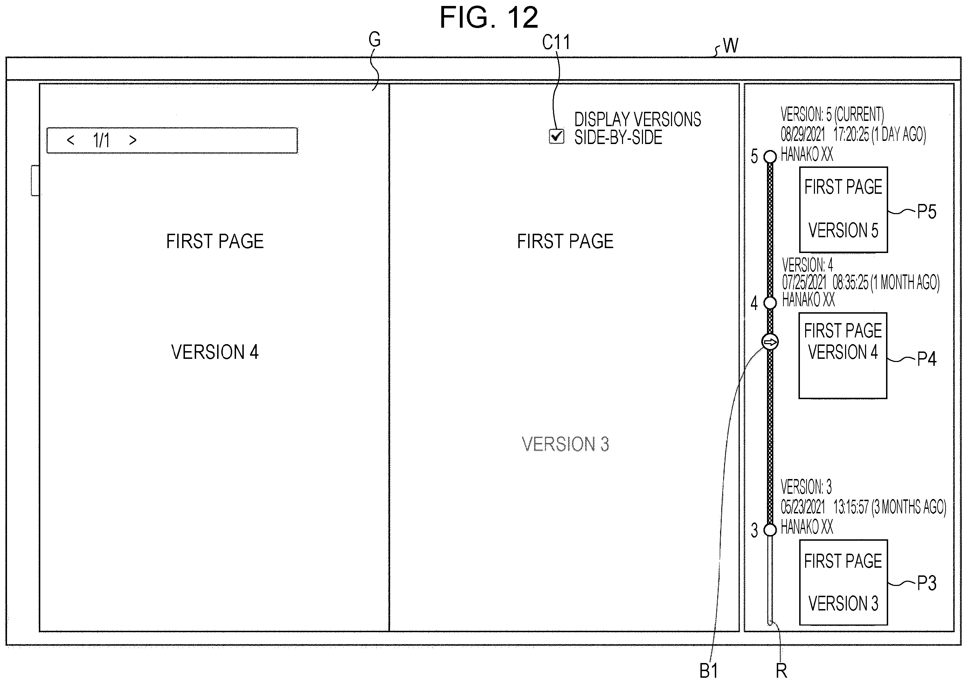

Furthermore, in accordance with an input operation performed by the user, the display controller 102 may also perform control for arranging the preview image of the predetermined page of the first version and the preview image of the predetermined page of the second version side-by-side and enlarging and displaying the preview images on the workspace. A specific example of a case where the preview image of the predetermined page of the first version and the preview image of the predetermined page of the second version are arranged side-by-side and are enlarged and displayed on the workspace will be described later with reference to Fig. 12.

The input-operation reception unit 103 receives an input operation performed by the user. Examples of the input operation performed by the user include a finger-based touching operation and a mouse operation. For example, the input-operation reception unit 103 receives an input operation for activating application software and displaying the workspace on the display 16 (see Fig. 2). Furthermore, the input-operation reception unit 103 receives an input operation for designating an electronic document and displaying a thumbnail image thereof on the workspace, as well as an input operation as the aforementioned first input operation for selecting the electronic-document thumbnail image displayed on the workspace. Examples of the "input operation for selecting the electronic-document thumbnail image" include an operation (i.e., a so-called mouse-over operation) involving superimposing a cursor that moves in the workspace in conjunction with a mouse operation performed by the user over the electronic-document thumbnail image and an operation involving touching or clicking on the electronic-document thumbnail image.

Moreover, the input-operation reception unit 103 receives an input operation as the aforementioned second input operation for superimposing the image of the predetermined page of the first version and the image of the predetermined page of the second version on each other and enlarging and displaying the superimposed image on the workspace. In detail, for example, the input-operation reception unit 103 receives an input operation performed on any position in a region formed between a first text character or symbol and a second text character or symbol that are displayed in the operation image. The first text character or symbol indicates the predetermined page of the first version, and the second text character or symbol indicates the predetermined page of the second version. Specific examples of this input operation will be described later with reference to specific examples in Fig. 7 and onward.

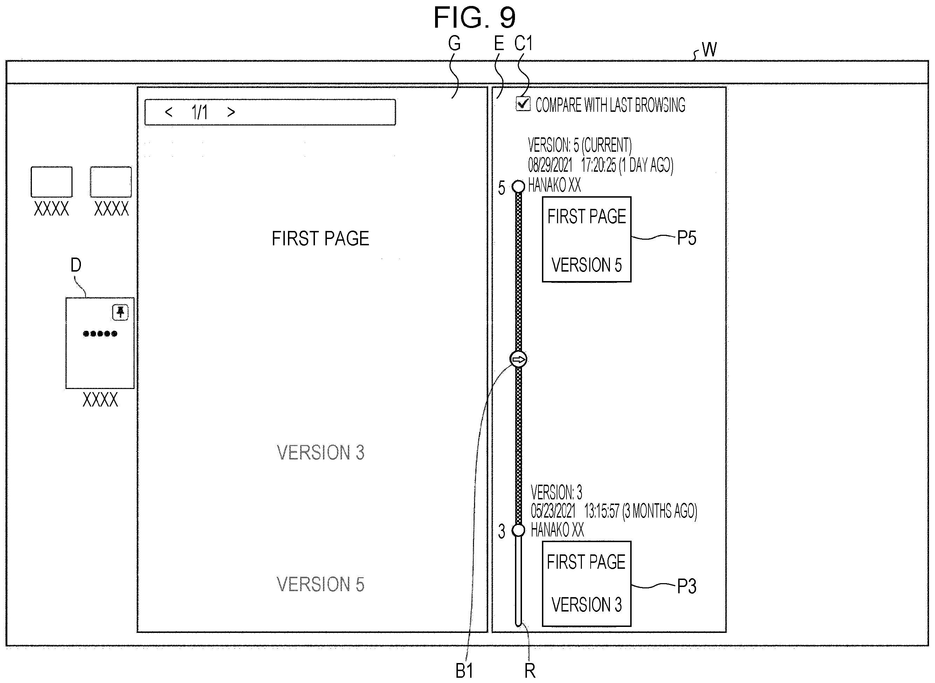

Furthermore, the input-operation reception unit 103 receives a third input operation for superimposing the preview image of the predetermined page of the first version and a preview image of the page in a previously-opened version, as the preview image of the predetermined page of the second version, on each other and enlarging and displaying the superimposed preview image on the workspace. Moreover, the input-operation reception unit 103 receives a fourth input operation for arranging the preview image of the predetermined page of the first version and the preview image of the predetermined page of the second version side-by-side and enlarging and displaying the preview images on the workspace. A specific example of the third input operation will be described later with reference to Fig. 9. A specific example of the fourth input operation will be described later with reference to Fig. 12.

The display-history acquisition unit 104 acquires display history information of an electronic image corresponding to a thumbnail image displayed on the workspace. In detail, the display-history acquisition unit 104 acquires display history information of the electronic image corresponding to the thumbnail image displayed on the workspace from display history information of each of the one or more electronic documents stored in the document DB 131 of the storage unit 13.

The version-history acquisition unit 105 acquires version history information of an electronic image corresponding to a thumbnail image displayed on the workspace. In detail, the version-history acquisition unit 105 acquires version history information of the electronic image corresponding to the thumbnail image displayed on the workspace from version history information of each of the one or more electronic documents stored in the document DB 131 of the storage unit 13.

The image processor 106 performs processing for varying the display mode for at least one of the image of the predetermined page of the first version and the image of the predetermined page of the second version that are to be enlarged and displayed in a superimposed fashion on the workspace. For example, the image processor 106 performs processing for making at least one of the image of the predetermined page of the first version and the image of the predetermined page of the second version unclear by increasing transparency, processing for making at least one of the image of the predetermined page of the first version and the image of the predetermined page of the second version clear and unclear by hatching, color-coding processing, processing for varying the thickness of text or graphics, or processing involving highlight display.

The transmission controller 107 performs control for transmitting various types of information toward the management server 30 or the outside via the communication unit 14 (see Fig. 2). For example, in a case where the management server 30 performs control for displaying the workspace on the display 16 of the user terminal 10 and control for displaying an electronic-document thumbnail image on the workspace, the transmission controller 107 performs control for transmitting various types of input information received by the input-operation reception unit 103 toward the management server 30.

### Functional Configuration of Controller of Management Server

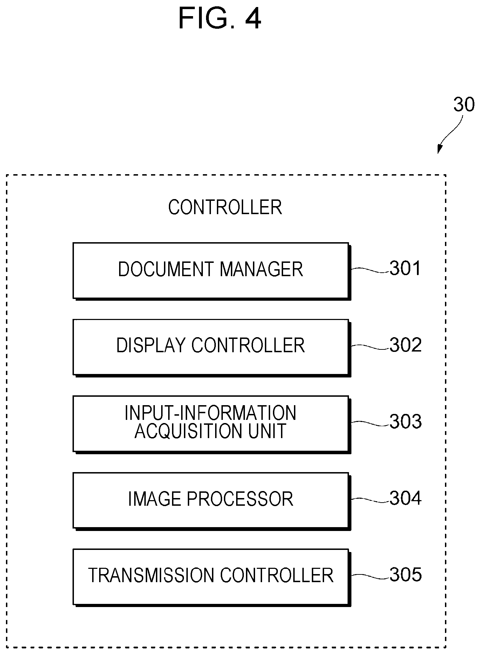

Fig. 4 illustrates a functional configuration of a controller of the management server 30 in a case where the management server 30 performs control for displaying the workspace on the display 16 of the user terminal 10.

When the management server 30 is to perform these types of processing, the controller of the management server 30 functions as a document manager 301, a display controller 302, an input-information acquisition unit 303, an image processor 304, and a transmission controller 305. The document manager 301, the display controller 302, and the image processor 304 function similarly to the document manager 101, the display controller 102, and the image processor 106 in Fig. 3, and descriptions thereof will be omitted.

The input-information acquisition unit 303 acquires various types of input information transmitted from the user terminal 10. For example, the input-information acquisition unit 303 acquires input information input for displaying, on the workspace, an electronic-document thumbnail image stored and managed in a database in a storage unit of the management server 30.

Furthermore, for example, the input-information acquisition unit 303 acquires input information input for selecting the electronic-document thumbnail image displayed on the workspace. Moreover, for example, the input-information acquisition unit 303 acquires input information input for superimposing the image of the predetermined page of the first version and the image of the predetermined page of the second version on each other and enlarging and displaying the superimposed image on the workspace. Furthermore, the input-information acquisition unit 303 acquires input information input for arranging the preview image of the predetermined page of the first version and the preview image of the predetermined page of the second version side-by-side and enlarging and displaying the preview images on the workspace.

The transmission controller 305 performs control for transmitting various types of information toward the user terminal 10 or the outside via a communication unit. For example, the transmission controller 305 performs control for transmitting, toward the user terminal 10, information (e.g., a thumbnail image) related to an electronic document designated in accordance with an input operation performed by the user from one or more electronic documents stored and managed in the database in the storage unit. Moreover, for each version, the transmission controller 305 performs control for transmitting the preview image of at least one page constituting the electronic document selected in accordance with the input operation performed by the user toward the user terminal 10.

### Flow of Processing by User Terminal

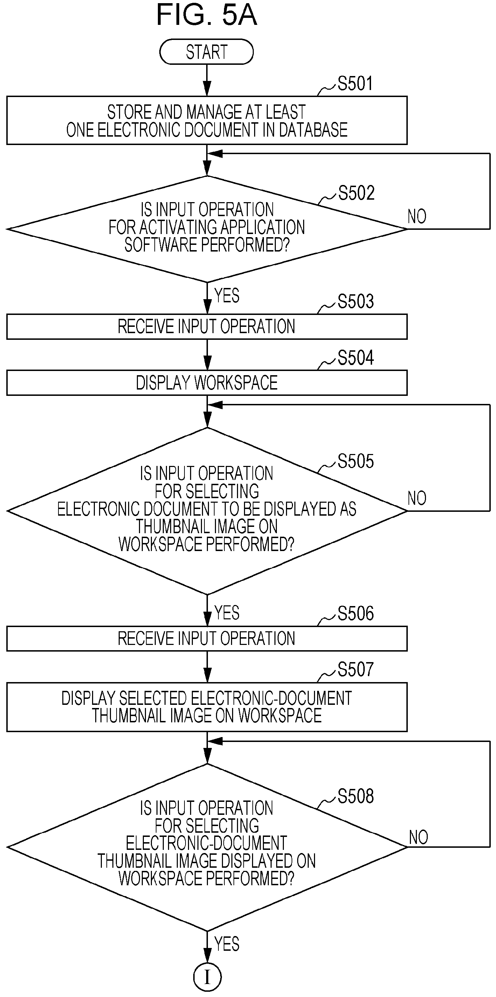

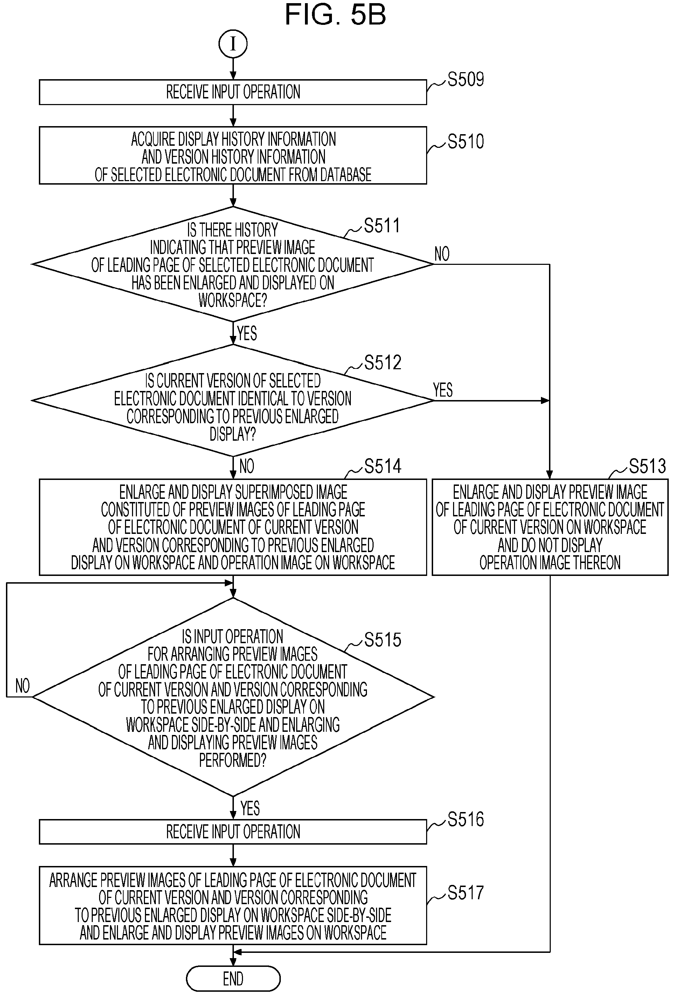

Figs. 5A and 5B are flowcharts illustrating the flow of processing by the user terminal 10. In the example in Figs. 5A and 5B, it is assumed that a first version is preliminarily set as the current version and a second version is preliminarily set as a version previously displayed in an enlarged fashion on the workspace. Moreover, it is assumed that a "predetermined page" is a leading page of an electronic document.

In step S501, the user terminal 10 stores and manages at least one electronic document in the database. In detail, the user terminal 10 stores and manages at least one electronic document displayable as a thumbnail image on the workspace in the document DB 131 (see Fig. 2) of the storage unit 13.

When an input operation for activating application software is performed (YES in step S502), the user terminal 10 receives the input operation in step S503 and displays the workspace on the display 16 (see Fig. 2) in step S504. In contrast, if the input operation for activating the application software is not performed (NO in step S502), the user terminal 10 repeats step S502 until the input operation for activating the application software is performed.

When an input operation for selecting an electronic document to be displayed as a thumbnail image on the workspace is performed (YES in step S505), the user terminal 10 receives the input operation in step S506 and displays the thumbnail image of the selected electronic document on the workspace in step S507. In contrast, if the input operation for selecting an electronic document to be displayed as a thumbnail image on the workspace is not performed (NO in step S505), the user terminal 10 repeats step S505 until the input operation for selecting an electronic document to be displayed as a thumbnail image on the workspace is performed.

When an input operation for selecting the electronic-document thumbnail image displayed on the workspace in step S507 is performed (YES in step S508), the user terminal 10 receives the input operation in step S509 and acquires display history information and version history information of the selected electronic document from the database in step S510. In detail, the user terminal 10 acquires the display history information and the version history information of an electronic image displaying the thumbnail image on the workspace from the display history information and the version history information of each of the one or more electronic documents stored in the document DB 131 of the storage unit 13. In contrast, if the input operation for selecting the electronic-document thumbnail image displayed on the workspace is not performed (NO in step S508), the user terminal 10 repeats step S508 until the input operation for selecting the electronic-document thumbnail image displayed on the workspace is performed.

If there is history indicating that a preview image of the leading page of the selected electronic document has been enlarged and displayed on the workspace (YES in step S511) and the current version of the selected electronic document is identical to the version corresponding to the previous enlarged display (YES in step S512), the user terminal 10 enlarges and displays the preview image of the leading page of the electronic document of the current version on the workspace but does not display an operation image thereon (step S513). If there is no history indicating that the preview image of the leading page of the selected electronic document has been enlarged and displayed on the workspace (NO in step S511), the user terminal 10 similarly enlarges and displays the preview image of the leading page of the electronic document of the current version on the workspace but does not display the operation image thereon (step S513).

In contrast, if there is history indicating that the preview image of the leading page of the selected electronic document has been enlarged and displayed on the workspace (YES in step S511) but the current version of the selected electronic document is not identical to the version corresponding to the previous enlarged display on the workspace (NO in step S512), a superimposed image constituted of the preview image of the leading page of the electronic document of the current version and the preview image of the leading page of the electronic document of the version corresponding to the previous enlarged display on the workspace and the operation image are enlarged and displayed on the workspace in step S514.

In the state where the preview image of the leading page of the electronic document of the current version and the preview image of the leading page of the electronic document of the version corresponding to the previous enlarged display are enlarged and displayed in a superimposed fashion, if an input operation for arranging the preview images of the leading page of the electronic document of the current version and the version corresponding to the previous enlarged display on the workspace side-by-side and enlarging and displaying the preview images is performed (YES in step S515), the user terminal 10 receives the input operation in step S516, and arranges the preview images of the leading page of the electronic document of the current version and the version corresponding to the previous enlarged display on the workspace side-by-side and enlarges and displays the preview images on the workspace in step S517.

In contrast, if the input operation for arranging the preview images of the leading page of the electronic document of the current version and the version corresponding to the previous enlarged display on the workspace side-by-side and enlarging and displaying the preview images is not performed (NO in step S515), step S515 is repeated until the input operation for arranging the preview images of the leading page of the electronic document of the current version and the version corresponding to the previous enlarged display on the workspace side-by-side and enlarging and displaying the preview images is performed or until an input operation for closing the preview images displayed in an enlarged fashion is performed.

### Flow of Processing by Management Server

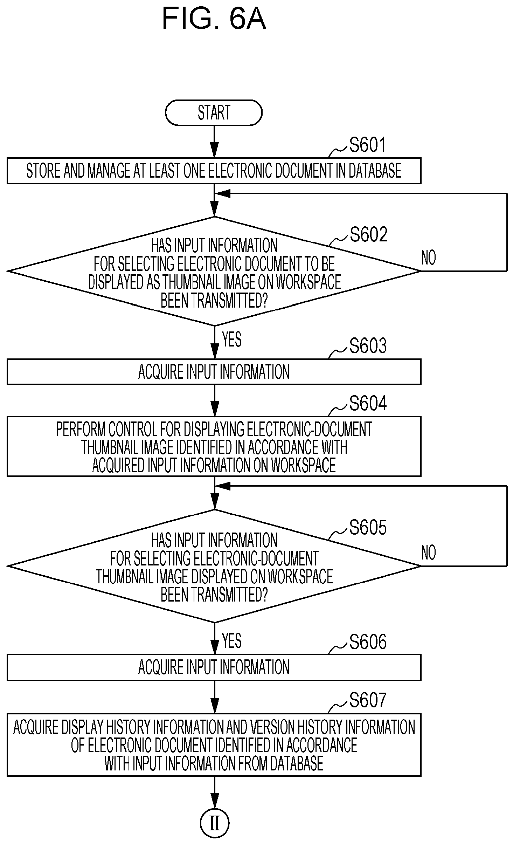

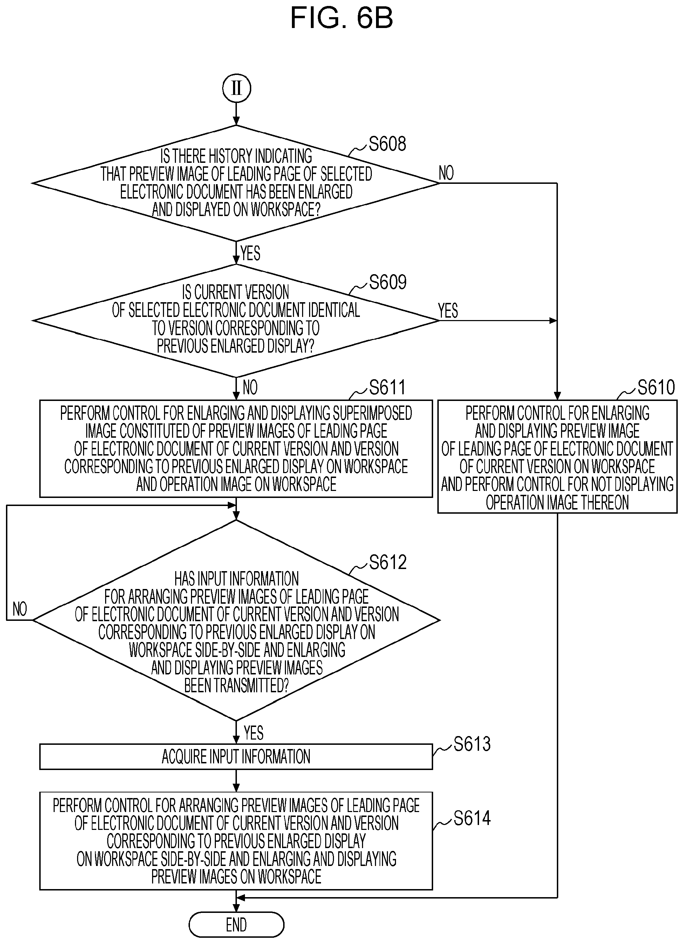

Figs. 6A and 6B are flowcharts illustrating the flow of processing by the management server 30 in a case where the management server 30 performs control for displaying the workspace on the display 16 of the user terminal 10. The example in Figs. 6A and 6B is similar to the example in Figs. 5A and 5B in that it is assumed that a first version is preliminarily set as the current version and a second version is preliminarily set as a version previously displayed in an enlarged fashion on the workspace. Moreover, it is assumed that a "predetermined page" is a leading page of an electronic document.

In step S601, the management server 30 stores and manages at least one electronic document in the database. When information input to the user terminal 10 in accordance with an input operation performed by the user for selecting an electronic document to be displayed as a thumbnail image on the workspace has been transmitted (YES in step S602), the management server 30 acquires the input information in step S603 and performs control for displaying an electronic-document thumbnail image identified in accordance with the acquired input information on the workspace in step S604. In contrast, if the input information for selecting an electronic document to be displayed as a thumbnail image on the workspace has not been transmitted (NO in step S602), the management server 30 repeats step S602 until the input information for selecting an electronic document to be displayed as a thumbnail image on the workspace is transmitted.

When information input to the user terminal 10 in accordance with an input operation performed by the user for selecting the electronic-document thumbnail image displayed on the workspace has been transmitted (YES in step S605), the management server 30 acquires the input information in step S606 and acquires display history information and version history information of the electronic document identified in accordance with the input information from the database in step S607. In contrast, if the information input for selecting the electronic-document thumbnail image displayed on the workspace has not been transmitted (NO in step S605), the management server 30 repeats step S605 until the information input for selecting the electronic-document thumbnail image displayed on the workspace is transmitted.

If there is history indicating that control for enlarging and displaying a preview image of the leading page of the selected electronic document on the workspace has been performed (YES in step S608) and the current version of the selected electronic document is identical to the version corresponding to the previous enlarged display (YES in step S609), the management server 30 performs control for enlarging and displaying the preview image of the leading page of the electronic document of the current version on the workspace and control for not displaying an operation image thereon in step S610.

If there is no history indicating that the control for enlarging and displaying the preview image of the leading page of the selected electronic document on the workspace has been performed (NO in step S608), the management server 30 similarly performs the control for enlarging and displaying the preview image of the leading page of the electronic document of the current version on the workspace and the control for not displaying the operation image thereon in step S610.

In contrast, if there is history indicating that the control for enlarging and displaying the preview image of the leading page of the selected electronic document on the workspace has been performed (YES in step S608) but the current version of the selected electronic document is not identical to the version corresponding to the previous enlarged display on the workspace (NO in step S609), the management server 30 performs control for enlarging and displaying, on the workspace, a superimposed image constituted of the preview image of the leading page of the electronic document of the current version and the preview image of the leading page of the electronic document of the version corresponding to the previous enlarged display on the workspace and the operation image in step S611.

In the state where the management server 30 performs the control for superimposing the preview image of the leading page of the electronic document of the current version on the preview image of the leading page of the electronic document of the version corresponding to the previous enlarged display on the workspace and enlarging and displaying the superimposed preview image, if information input for arranging the preview images of the leading page of the electronic document of the current version and the version corresponding to the previous enlarged display on the workspace side-by-side and enlarging and displaying the preview images has been transmitted (YES in step S612), the management server 30 acquires the input information in step S613 and performs control for arranging the preview images of the leading page of the electronic document of the current version and the version corresponding to the previous enlarged display on the workspace side-by-side and enlarging and displaying the preview images in step S614.

In contrast, if the information input for arranging the preview images of the leading page of the electronic document of the current version and the version corresponding to the previous enlarged display on the workspace side-by-side and enlarging and displaying the preview images has not been transmitted (NO in step S612), the management server 30 repeats step S612 until the information input for arranging the preview images of the leading page of the electronic document of the current version and the version corresponding to the previous enlarged display on the workspace side-by-side and enlarging and displaying the preview images is transmitted or until information input for closing the preview images displayed in an enlarged fashion is transmitted.

### Specific Examples

Figs. 7 to 12 each illustrate a specific example of a workspace displayed on the display 16 of the user terminal 10.

As mentioned above, when the first input operation for selecting an electronic-document thumbnail image displayed on the workspace is performed, an image of a predetermined page included in one or more pages constituting the electronic document and an operation image for receiving the second input operation are enlarged and displayed on the workspace such that the images are displayed larger in size than the electronic-document thumbnail image. Figs. 7 to 12 illustrate specific examples of the image of the predetermined page and the operation image that are enlarged and displayed on the workspace. In the following description with reference to Figs. 7 to 12, the image of the predetermined page and the operation image that are enlarged and displayed on the workspace will be referred to as "quick-view".

When the user operates the operation image in a state where the quick-view is being displayed, one or more past versions of the page displayed in an enlarged fashion are successively displayed in a superimposed fashion over the current version of the page. For example, Fig. 7 illustrates a preview image G of the first page of the electronic document and an operation image E as the quick-view displayed as a result of a mouse-over operation performed on an electronic-document thumbnail image D displayed on a workspace W.

The text string "first page" shown in the preview image G illustrated in each of Figs. 7 to 12 simply indicates that the shown page is the first page and is not indicated in the actual page. On the other hand, the text strings "version 3", "version 4", and "version 5" are each indicated in the actual page. It is assumed that the position of each of these text strings on the preview image G is the position of the text string indicated on the actual page.

The operation image E is to be displayed only when there is history indicating that the quick-view has been displayed in the past and that the current version is not identical to the version corresponding to previous display of the quick-view. Furthermore, the operation image E is displayed in a mode in which a version is selectable by the user from the version corresponding to the previous display of the quick-view to the current version. In the example in Fig. 7, a thumbnail image P5 corresponding to the current version (i.e., version 5) of the first page of the electronic document, a thumbnail image P4 corresponding to one earlier version (i.e., version 4) (referred to as "the last version" hereinafter), and a thumbnail image P3 of a version (i.e., version 3) earlier than the current version by two versions (referred to as "the second-to-last version" hereinafter) are displayed in a time-series fashion. Furthermore, each of the thumbnail images P3 to P5 is surrounded by version-related information (e.g., version number), information indicating the saved timing (e.g., one day ago, one month ago, and so on), and information (e.g., "Hanako XX" as a user name) indicating the user who has performed the input operation for the saving process.

Fig. 7 illustrates an example of the operation image E in a case where the version previously displayed as the quick-view is the second-to-last version (i.e., version 3). Thus, in the operation image E, thumbnail images from the second-to-last version (i.e., version 3) to the current version (i.e., version 5) are displayed. In the operation image E, a linear seek bar R is disposed. Furthermore, a button B1 indicating an arrow symbol is disposed in a superimposed fashion over the seek bar R. The button B1 receives the second input operation performed by the user. The button B1 indicates the thumbnail image of the version currently displayed as the quick-view. Since the button B1 indicates the current version (i.e., version 5) in the example in Fig. 7, the preview image G of the current version (i.e., version 5) alone is displayed as the quick-view.

If there is no history indicating that the quick-view has been displayed in the past and the quick-view is displayed for the first time, the quick-view is displayed in a state where the button B1 is indicating the current version (i.e., version 5). The distance between the thumbnail images indicating the respective versions displayed in the operation image E is automatically adjusted in accordance with the interval between the saved timings of the electronic document. Therefore, there may be a case where the thumbnail images indicating the respective versions are not separated from each other by equal distances.

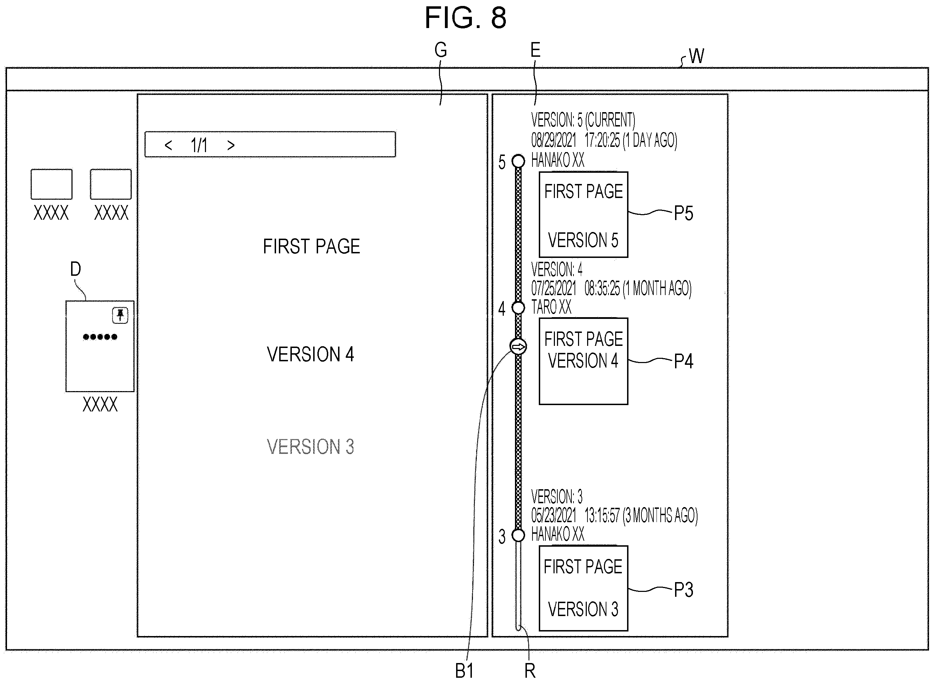

Fig. 8 illustrates a specific example of an operation performed on the seek bar R. The user may perform a touching operation or a mouse operation to display the button B1 on the seek bar R specifically at a freely-chosen position, or may perform a sliding operation in the vertical direction to designate a version to be displayed as the quick-view. In contrast to the above-described example in Fig. 7 in which the current version (i.e., version 5) is designated, the button B1 indicates a region between two versions in the example in Fig. 8. In detail, in the region between the last version (i.e., version 4) and the second-to-last version (i.e., version 3), the button B1 indicates a region closer toward the last version (i.e., version 4).

In this case, the preview image G of the last version (i.e., version 4) and the preview image G of the second-to-last version (i.e., version 3) are displayed in a superimposed fashion as the quick-view. The preview image G of the second-to-last version (i.e., version 3) is displayed lighter in a transparent state than the preview image G of the last version (i.e., version 4). This is because the transparency of the images of the pages is controlled such that the color density of the images of the pages varies in accordance with the position of the button B1.

In detail, the transparency of the preview images G is controlled such that the preview image G of the version located closer to the position of the button B1 is displayed in a darker mode, whereas the preview image G of the version located farther from the position of the button B1 is displayed in a lighter mode. In the example in Fig. 8, the button B1 indicates a region closer toward the last version (i.e., version 4) that is earlier by one version than the second-to-last version (i.e., version 3). Thus, the preview image G of the second-to-last version (i.e., version 3) is displayed in a lighter mode than the preview image G of the last version (i.e., version 4) located closer to the position of the button B1. In this case, for example, the control is performed such that the transparency of the last version (i.e., version 4) is 20% and the transparency of the second-to-last version (i.e., version 3) is 80%.

Although not shown, if the button B1 is moved to a position indicating a region serving as an intermediate point between the last version (i.e., version 4) and the second-to-last version (i.e., version 3), the transparency is controlled such that the preview images G of the two versions have identical lightness of color. In detail, the control is performed such that the transparency of the last version (i.e., version 4) and the transparency of the second-to-last version (i.e., version 3) are both 50%. Accordingly, the user may continuously change the transparency of the images of the two versions displayed as the quick-view by sliding the button B1 on the seek bar R in the vertical direction.

Consequently, the user may simply view the quick-view compactly displayed on the workspace W to readily ascertain the difference between the last version (i.e., version 4) and the second-to-last version (i.e., version 3). Moreover, based on the position of the button B1 and the density of the text strings displayed in a superimposed fashion, the user may view and identify the version of each text string indicated in each preview image G.

Fig. 9 illustrates a specific example in a case where a comparison with a version previously displayed as the quick-view is to be performed. If the user desires to compare the current version with a version previously displayed as the quick-view without minding the version or versions in-between, the user performs the following operation as a third input operation. Specifically, the user inputs a checkmark in a checkbox C1 indicating "compare with last browsing" provided at an upper section of the operation image E shown in the example in Fig. 9.

When the checkmark is input to the checkbox C1, the display mode for the seek bar R is changed to a display mode that only allows a comparison between the current version and the version previously displayed as the quick-view. Fig. 9 illustrates an example where the display mode for the seek bar R is changed when the version previously displayed as the quick-view is the second-to-last version (i.e., version 3).

Specifically, although the current version (i.e., version 5) and the version (i.e., version 3) previously displayed as the quick-view originally have the last version (i.e., version 4) therebetween, since the checkmark is input to the checkbox C1, the operation image E displays the current version (i.e., version 5) and the second-to-last version (i.e., version 3) but does not display the last version (i.e., version 4). In the example in Fig. 9, the button B1 is located at the position indicating the region serving as the intermediate point between the current version (i.e., version 5) and the second-to-last version (i.e., version 3), so that the transparency of the images of the two versions is controlled to be 50%.

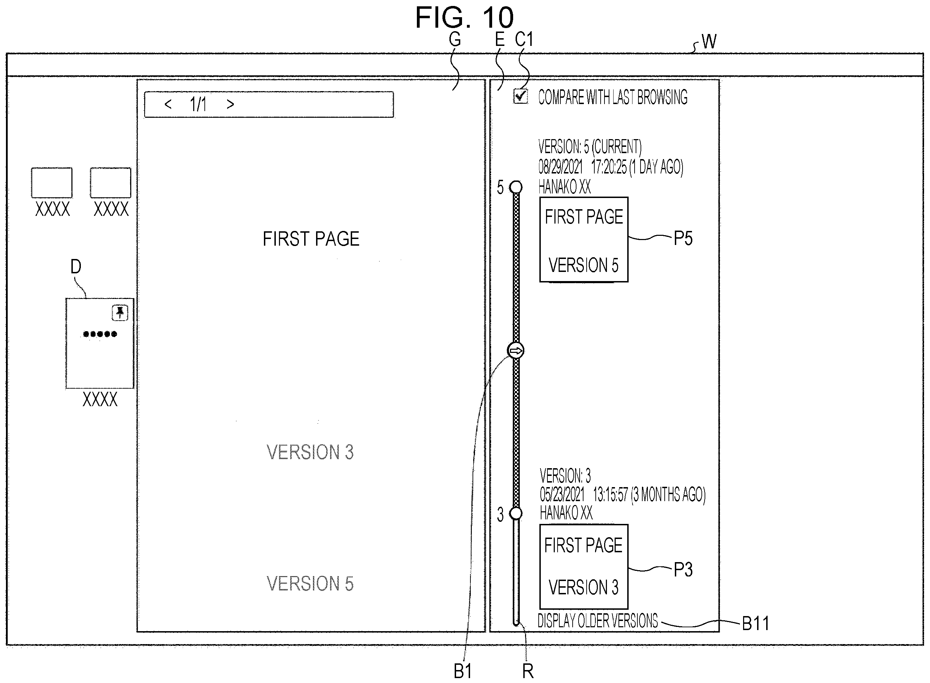

Fig. 10 illustrates a specific example in a case where a comparison with a version earlier than the version previously displayed as the quick-view is to be performed. In the above-described example, the versions from the version previously displayed as the quick-view to the current version are displayed in the operation image E. In contrast, if the user desires to compare an even older version with the current version, for example, the user presses a button B11 indicating "display older versions" shown in a lower section of the operation image E in Fig. 10.

When the button B11 is pressed, an older version originally not displayed in the operation image E is displayed in the operation image E. In detail, at least one version is additionally displayed in the operation image E, starting from a newer version among past versions not displayed in the operation image E. In this case, all versions from the original version (i.e., version 1) to the current version may be displayed in the operation image E. Although not shown, a version or versions to be displayed in the operation image E may be set in advance for each user. In this case, for example, all versions (from the original version to the current version) may be set in advance so as to be constantly displayed in the operation image E.

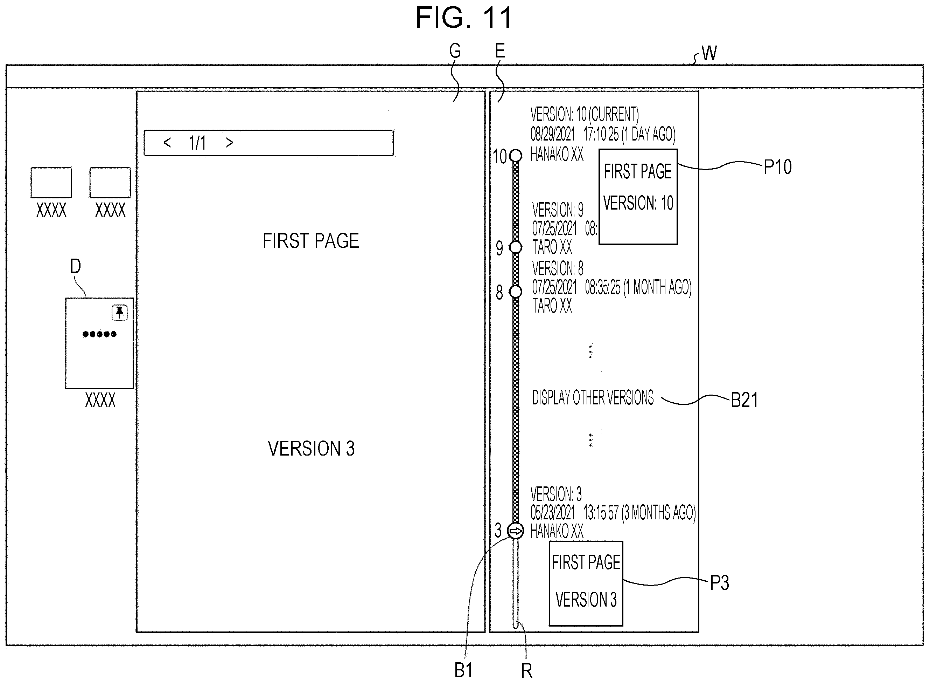

Fig. 11 illustrates a specific example of display of the operation image E in a case where there are a large number of versions to be displayed.

When versions from the version previously displayed as the quick-view to the current version are to be displayed in the operation image E, if there are a large number of versions to be displayed, a problem may occur in terms of space. In this case, for example, the thumbnail image of each version to be displayed in the operation image E is automatically reduced, so that all thumbnail images may be displayed. Alternatively, text information alone may be displayed instead of displaying the thumbnail images in the operation image E.

As shown in Fig. 11, examples of the text information to be displayed in the operation image E include version-related text information (e.g., version number), text information indicating the saved timing (e.g., one day ago, one month ago, and so on), and text information (e.g., user name) indicating the user who has performed the input operation for the saving process. In this case, when a mouse-over operation is performed on the text information, a thumbnail image (i.e., a thumbnail image P10 in the example in Fig. 11) may be displayed.

Furthermore, for example, as shown in Fig. 11, a button B21 indicating the text "display other versions" may be displayed automatically in a region between versions. In this case, when the button B21 is pressed, a thumbnail image of each version may be automatically reduced and displayed, or text information alone may be automatically displayed. Although not shown, a vertical scroll bar may be additionally provided within the operation image E, such that all versions are confirmable while performing a scrolling operation. In this case, when the button B1 is to be operated, the button B1 may be scrollable automatically outside the display region.

Furthermore, for example, versions to be displayed in the operation image E may be settable in advance, such that versions not to be displayed may be automatically set in a non-display mode. In detail, for example, if the version previously displayed as the quick-view is the eighth-to-last version, the versions to be displayed in the operation image E may be set in advance to "up to four earlier versions from current version". For the fifth-to-last version to the eighth-to-last version, such versions may be displayed by pressing a button, such as the button B21 in Fig. 11.

Fig. 12 illustrates a specific example in a case where two versions are displayed side-by-side.

As an alternative to the above-described example in which two versions are displayed in a superimposed fashion as the quick-view, two versions may be displayed side-by-side. In the example in Fig. 12, the last version (i.e., version 4) and the second-to-last version (i.e., version 3) are displayed side-by-side. In order to display the two versions side-by-side, for example, as shown in Fig. 12, the user inputs a checkmark in a checkbox C11 indicating "display versions side-by-side" as a fourth input operation. Another method involves the user performing a mouse-over operation as an input operation on the seek bar R to display the two versions in a superimposed fashion as the quick-view, and performing a clicking operation to display the two versions side-by-side as the quick-view.

Although the exemplary embodiment has been described above, the exemplary embodiment of the present disclosure is not to be limited to that described above. Moreover, the effects achieved by the exemplary embodiment of the present disclosure are also not to be limited to those described above. For example, the configuration of the information processing system 1 shown in Fig. 1 and the hardware configuration of the user terminal 10 shown in Fig. 2 are merely examples for achieving the objective of the exemplary embodiment of the present disclosure and are not limited in particular. Furthermore the functional configuration of the user terminal 10 shown in Fig. 3 and the functional configuration of the management server 30 shown in Fig. 4 are merely examples and are not limited in particular. The information processing system 1 in Fig. 1 is sufficient so long as it has the functions for entirely executing the above-described processing, and the types of functional configurations to be used for implementing these functions are not limited to the examples in Figs. 3 and 4.

The order of the steps included in the processing by the user terminal 10 shown in Figs. 5A and 5B and the order of the steps included in the processing by the management server 30 shown in Figs. 6A and 6B are merely examples and are not limited in particular. The processing does not necessarily have to be performed in a time-series fashion in the order of the steps shown. Instead of being performed in a time-series fashion, the steps may be performed concurrently or individually. Moreover, the specific examples shown in Figs. 7 to 12 are merely examples and are not limited in particular.

For example, the linear seek bar R does not have to be disposed in the operation image E shown in Figs. 7 to 12. For example, thumbnail images or text information of the respective versions may be arranged sequentially in a time-series fashion. By simply performing a mouse-over operation on any position in the region of the operation image E, a preview image or images G of one or two versions disposed close to the position may be displayed as the quick-view.

Furthermore, for example, in the operation image E shown in Figs. 7 to 12, the distance between the thumbnail images is automatically adjusted in accordance with the interval between the saved timings of the electronic document. Alternatively, without adjusting the distance between the thumbnail images, the thumbnail images may be displayed while being arranged sequentially in a time-series fashion in accordance with the space of the operation image E.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims

## Claims

1. An information processing system (1) comprising:
a processor configured to:
receive a first input operation, performed by a user, selecting a thumbnail image (D) of an electronic document displayed on a display;
perform control including enlarging and displaying an image (G) of a predetermined page included in one or more pages constituting the electronic document and an operation unit image (E) on the display such that the image of the predetermined page and the operation unit image are displayed larger in size than the thumbnail image, the operation unit image at least including an operation image (B1) for receiving a second input operation for displaying images of the predetermined page for different versions of the electronic document;
receive a second input operation performed by the user on the operation image; and
perform control including superimposing a preview image of the predetermined page of a first version and a preview image of the predetermined page of a second version on each other and enlarging and displaying the superimposed preview image on the display in a mode in which a difference between the versions is identifiable by varying a display mode for each of the preview images in accordance with the second input operation performed on the operation image.

2. The information processing system (1) according to Claim 1,
wherein the processor is configured to receive an operation for superimposing a cursor on the thumbnail image as the operation for selecting the thumbnail image, the cursor moving in the display in conjunction with an input operation performed by the user.

3. The information processing system (1) according to Claim 1,
wherein the processor is configured to perform control including enlarging and displaying the operation image on the display if a version of the electronic document opened in accordance with an input operation performed by the user is different from a version corresponding to previous enlarged display on the display.

4. The information processing system (1) according to Claim 1,
wherein the processor is configured to perform control including not displaying the operation image on the display if a version of the electronic document enlarged and displayed on the display in accordance with an input operation performed by the user is identical to a version corresponding to previous enlarged display on the display or if the electronic document has never been enlarged and displayed on the display in accordance with the input operation.

5. The information processing system (1) according to Claim 1,
wherein the processor is configured to:
receive the second input operation performed on any position in a region formed between a first text character or symbol and a second text character or symbol that are displayed in the operation image, the first text character or symbol indicating the predetermined page of the first version, the second text character or symbol indicating the predetermined page of the second version; and
vary the display mode in accordance with the position on which the second input operation is performed.

6. The information processing system (1) according to Claim 5,
wherein the processor is configured to:
make the display mode for the preview image of the predetermined page of the first version clear and the display mode for the preview image of the predetermined page of the second version unclear as the position on which the second input operation is performed approaches the first text character or symbol; and
make the display mode for the preview image of the predetermined page of the second version clear and the display mode for the preview image of the predetermined page of the first version unclear as the position on which the second input operation is performed approaches the second text character or symbol.

7. The information processing system (1) according to Claim 6,
wherein the processor is configured to make the display mode clear by reducing display transparency of each of the preview image of the predetermined page of the first version and the preview image of the predetermined page of the second version and make the display mode unclear by increasing the display transparency.

8. The information processing system (1) according to Claim 6,
wherein a linear symbol (R) disposed between the first text character or symbol and the second text character or symbol is displayed in the region, and the second input operation is performed on any position of the linear symbol.

9. The information processing system (1) according to Claim 1,
wherein the processor is configured to perform control including superimposing the preview image of the page of a current version and the preview image of the page of a version previously opened in accordance with an input operation performed by the user on each other and enlarging and displaying the superimposed preview image on the display, the preview image of the page of the current version serving as the preview image of the predetermined page of the first version, the preview image of the page of the version previously opened in accordance with the input operation performed by the user serving as the preview image of the predetermined page of the second version.

10. The information processing system (1) according to Claim 9,
wherein the processor is configured to perform control including superimposing the preview image of the predetermined page of the first version and the preview image of the page of the version previously opened in accordance with the input operation performed by the user as the preview image of the predetermined page of the second version and enlarging and displaying the superimposed preview image on the display when a third input operation is performed by the user.

11. The information processing system (1) according to Claim 1,
wherein the processor is configured to perform control including arranging the preview image of the predetermined page of the first version and the preview image of the predetermined page of the second version side-by-side and enlarging and displaying the preview images on the display in accordance with a fourth input operation performed by the user.

12. A program which when run on a computer, causes the computer to execute a process, the process comprising:
receiving a first input operation, performed by a user, selecting a thumbnail image (D) of an electronic document displayed on a display;
performing control including enlarging and displaying an image (G) of a predetermined page included in one or more pages constituting the electronic document and an operation unit image (E) on the display such that the image of the predetermined page and the operation unit image are displayed larger in size than the thumbnail image, the operation unit image at least including an operation image (B1) for receiving a second input operation for displaying images of the predetermined page for different versions of the electronic document;
receiving a second input operation performed by the user on the operation image; and
performing control including superimposing a preview image of the predetermined page of a first version and a preview image of the predetermined page of a second version on each other and enlarging and displaying the superimposed preview image on the display in a mode in which a difference between the versions is identifiable by varying a display mode for each of the preview images in accordance with the second input operation performed on the operation image.

## Patentansprüche

1. Informationsverarbeitungssystem (1), umfassend:
einen Prozessor, der konfiguriert ist zum:
Empfangen eines ersten durch einen Benutzer durchgeführten Eingabevorgangs, der ein Miniaturbild (D) eines auf einer Anzeige angezeigten elektronischen Dokuments auswählt;
Durchführen von Steuerung, die Vergrößern und Anzeigen eines Bildes (G) einer vorbestimmten Seite, die in einer oder mehreren Seiten beinhaltet ist, die das elektronische Dokument darstellen, und eines Betriebseinheitsbildes (E) auf der Anzeige beinhaltet, sodass das Bild der vorbestimmten Seite und das Betriebseinheitsbild in einer größeren Größe als das Miniaturbild angezeigt werden, wobei das Betriebseinheitsbild mindestens ein Vorgangsbild (B1) zum Empfangen eines zweiten Eingabevorgangs zum Anzeigen von Bildern der vorbestimmten Seite für unterschiedliche Versionen des elektronischen Dokuments beinhaltet;
Empfangen eines zweiten durch einen Benutzer durchgeführten Eingabevorgangs auf dem Vorgangsbild; und
Durchführen von Steuerung, die Überlagern eines Vorschaubildes der vorbestimmten Seite einer ersten Version und eines Vorschaubildes der vorbestimmten Seite einer zweiten Version übereinander und Vergrößern und Anzeigen des überlagerten Vorschaubildes auf der Anzeige in einem Modus, in dem ein Unterschied zwischen den Versionen identifizierbar ist, beinhaltet, indem ein Anzeigemodus für jedes der Vorschaubilder gemäß dem zweiten auf dem Vorgangsbild durchgeführten Eingabevorgang gewechselt wird.

2. Informationsverarbeitungssystem (1) nach Anspruch 1,
wobei der Prozessor dazu konfiguriert ist, einen Vorgang zum Überlagern eines Cursors auf dem Miniaturbild als den Vorgang zum Auswählen des Miniaturbildes zu empfangen, wobei sich der Cursor in der Anzeige in Verbindung mit einem durch den Benutzer durchgeführten Eingabevorgang bewegt.

3. Informationsverarbeitungssystem (1) nach Anspruch 1,
wobei der Prozessor dazu konfiguriert ist, Steuerung durchzuführen, die das Vergrößern und das Anzeigen des Vorgangsbildes auf der Anzeige beinhaltet, wenn sich eine Version des elektronischen Dokuments, die gemäß einem durch den Benutzer durchgeführten Eingabevorgang geöffnet wurde, von einer Version unterscheidet, die einer vorherigen vergrößerten Anzeige auf der Anzeige entspricht.

4. Informationsverarbeitungssystem (1) nach Anspruch 1,
wobei der Prozessor dazu konfiguriert ist, Steuerung durchzuführen, die das nicht Anzeigen des Vorgangsbildes auf der Anzeige beinhaltet, wenn eine Version des elektronischen Dokuments, die gemäß einem durch den Benutzer durchgeführten Eingabevorgang vergrößert und auf der Anzeige angezeigt wird, identisch mit einer Version ist, die einer vorherigen vergrößerten Anzeige auf der Anzeige entspricht, oder wenn das elektronische Dokument nie vergrößert und gemäß dem Eingabevorgang auf der Anzeige angezeigt wurde.

5. Informationsverarbeitungssystem (1) nach Anspruch 1,
wobei der Prozessor konfiguriert ist zum:
Empfangen des zweiten Eingabevorgangs, der an einer beliebigen Position in einem Bereich zwischen einem ersten Textzeichen oder -symbol und einem zweiten Textzeichen oder -symbol, die in dem Eingabebild angezeigt werden, durchgeführt wird, wobei das erste Textzeichen oder -symbol die vorbestimmte Seite der ersten Version angibt, das zweite Textzeichen oder -symbol die vorbestimmte Seite der zweiten Version angibt; und
Wechseln des Anzeigemodus gemäß der Position, an der der zweite Eingabevorgang durchgeführt wird.

6. Informationsverarbeitungssystem (1) nach Anspruch 5,
wobei der Prozessor konfiguriert ist zum:
klar Machen des Anzeigemodus für das Vorschaubild der vorbestimmten Seite der ersten Version klar und unklar Machen des Anzeigemodus für das Vorschaubild der vorbestimmten Seite der zweiten Version, wenn sich die Position, an der der zweite Eingabevorgang durchgeführt wird, dem ersten Textzeichen oder - symbol nähert; und
klar Machen des Anzeigemodus für das Vorschaubild der vorbestimmten Seite der zweiten Version klar und unklar Machen des Anzeigemodus für das Vorschaubild der vorbestimmten Seite der ersten Version, wenn sich die Position, an der der zweite Eingabevorgang durchgeführt wird, dem zeriten Textzeichen oder -symbol nähert.

7. Informationsverarbeitungssystem (1) nach Anspruch 6,
wobei der Prozessor dazu konfiguriert ist, den Anzeigemodus klar zu machen, indem die Anzeigetransparenz sowohl des Vorschaubildes der vorbestimmten Seite der ersten Version als auch des Vorschaubildes der vorbestimmten Seite der zweiten Version verringert wird, und den Anzeigemodus unklar zu machen, indem die Anzeigetransparenz erhöht wird.

8. Informationsverarbeitungssystem (1) nach Anspruch 6,
wobei ein lineares Symbol (R), das zwischen dem ersten Textzeichen oder -symbol und dem zweiten Textzeichen oder - symbol angeordnet ist, in dem Bereich angezeigt wird, und der zweite Eingabevorgang an einer beliebigen Position des linearen Symbols durchgeführt wird.

9. Informationsverarbeitungssystem (1) nach Anspruch 1,
wobei der Prozessor dazu konfiguriert ist, Steuerung durchzuführen, die das Überlagern des Vorschaubildes der Seite einer aktuellen Version und des Vorschaubildes der Seite einer zuvor gemäß einem durch den Benutzer durchgeführten Eingabevorgang geöffneten Version übereinander und das Vergrößern und Anzeigen des überlagerten Vorschaubildes auf der Anzeige beinhaltet, wobei das Vorschaubild der Seite der aktuellen Version als das Vorschaubild der vorbestimmten Seite der ersten Version dient, das Vorschaubild der Seite der zuvor gemäß dem durch den Benutzer durchgeführten Eingabevorgang geöffneten Version als das Vorschaubild der vorbestimmten Seite der zweiten Version dient.

10. Informationsverarbeitungssystem (1) nach Anspruch 9,
wobei der Prozessor dazu konfiguriert ist, Steuerung durchzuführen, die das Überlagern des Vorschaubildes der vorbestimmten Seite der ersten Version und des Vorschaubildes der Seite der Version, die zuvor gemäß dem durch den Benutzer durchgeführten Eingabevorgang geöffnet wurde, als das Vorschaubild der vorbestimmten Seite der zweiten Version und das Vergrößern und das Anzeigen des überlagerten Vorschaubildes auf der Anzeige, wenn ein dritter Eingabevorgang durch den Benutzer durchgeführt wird, beinhaltet.

11. Informationsverarbeitungssystem (1) nach Anspruch 1,
wobei der Prozessor dazu konfiguriert ist, Steuerung durchzuführen, die Anordnen des Vorschaubildes der vorbestimmten Seite der ersten Version und des Vorschaubildes der vorbestimmten Seite der zweiten Version nebeneinander und das Vergrößern und das Anzeigen der Vorschaubilder auf der Anzeige gemäß einem vierten durch den Benutzer durchgeführten Eingabevorgang beinhaltet.

12. Programm, das, wenn es auf einem Computer läuft, den Computer veranlasst, einen Prozess auszuführen, wobei der Prozess Folgendes umfasst:
Empfangen eines ersten durch einen Benutzer durchgeführten Eingabevorgangs, der ein Miniaturbild (D) eines auf einer Anzeige angezeigten elektronischen Dokuments auswählt;
Durchführen von Steuerung, die das Vergrößern und das Anzeigen eines Bildes (G) einer vorbestimmten Seite, die in einer oder mehreren Seiten beinhaltet ist, die das elektronische Dokument darstellen, und eines Betriebseinheitsbildes (E) auf der Anzeige beinhaltet, sodass das Bild der vorbestimmten Seite und das Betriebseinheitsbild in einer größeren Größe als das Miniaturbild angezeigt werden, wobei das Betriebseinheitsbild mindestens ein Vorgangsbild (B1) zum Empfangen eines zweiten Eingabevorgangs zum Anzeigen von Bildern der vorbestimmten Seite für unterschiedliche Versionen des elektronischen Dokuments beinhaltet;
Empfangen eines zweiten durch einen Benutzer durchgeführten Eingabevorgangs auf dem Vorgangsbild; und
Durchführen von Steuerung, die Überlagern eines Vorschaubildes der vorbestimmten Seite einer ersten Version und eines Vorschaubildes der vorbestimmten Seite einer zweiten Version übereinander und Vergrößern und Anzeigen des überlagerten Vorschaubildes auf der Anzeige in einem Modus, in dem ein Unterschied zwischen den Versionen identifizierbar ist, beinhaltet, indem ein Anzeigemodus für jedes der Vorschaubilder gemäß dem zweiten auf dem Vorgangsbild durchgeführten Eingabevorgang gewechselt wird.

## Revendications

1. Système de traitement d'informations (1) comprenant :
un processeur configuré pour :
recevoir une première opération d'entrée, réalisée par un utilisateur, sélectionnant une image miniature (D) d'un document électronique affiché sur un affichage ;
réaliser une commande comportant l'agrandissement et l'affichage d'une image (G) d'une page prédéterminée incluse dans une ou plusieurs pages constituant le document électronique et d'une image d'unité d'opération (E) sur l'affichage de sorte que l'image de la page prédéterminée et l'image de l'unité d'opération sont affichées dans une taille plus grande que l'image miniature, l'image de l'unité d'opération comportant au moins une image d'opération (B1) pour recevoir une deuxième opération d'entrée pour afficher des images de la page prédéterminée pour différentes versions du document électronique ;
recevoir une deuxième opération d'entrée réalisée par l'utilisateur sur l'image d'opération ; et
réaliser une commande comportant la superposition d'une image d'aperçu de la page prédéterminée d'une première version et d'une image d'aperçu de la page prédéterminée d'une seconde version, ainsi que l'agrandissement et l'affichage de l'image d'aperçu superposée sur l'affichage dans un mode dans lequel une différence entre les versions est identifiable en faisant varier un mode d'affichage pour chacune des images d'aperçu conformément à la deuxième opération d'entrée réalisée sur l'image d'opération.

2. Système de traitement d'informations (1) selon la revendication 1,
dans lequel le processeur est configuré pour recevoir une opération de superposition d'un curseur sur l'image miniature comme opération de sélection de l'image miniature, le curseur se déplaçant dans l'affichage en conjonction avec une opération d'entrée réalisée par l'utilisateur.

3. Système de traitement d'informations (1) selon la revendication 1,
dans lequel le processeur est configuré pour réaliser une commande comportant l'agrandissement et l'affichage de l'image d'opération sur l'affichage, si une version du document électronique ouverte conformément à une opération d'entrée réalisée par l'utilisateur est différente d'une version correspondant à un affichage agrandi précédent sur l'affichage.

4. Système de traitement d'informations (1) selon la revendication 1,
dans lequel le processeur est configuré pour réaliser une commande comportant l'absence d'affichage de l'image d'opération sur l'affichage, si une version du document électronique agrandie et affichée conformément à une opération d'entrée réalisée par l'utilisateur est identique à une version correspondant à un affichage agrandi précédent sur l'affichage ou si le document électronique n'a jamais été agrandi et affiché sur l'affichage, conformément à l'opération d'entrée.

5. Système de traitement d'informations (1) selon la revendication 1,
dans lequel le processeur est configuré pour :
recevoir la deuxième opération d'entrée réalisée sur une quelconque position dans une région formée entre un premier caractère ou symbole de texte et un second caractère ou symbole de texte qui sont affichés dans l'image d'opération, le premier caractère ou symbole de texte indiquant la page prédéterminée de la première version, le second caractère ou symbole de texte indiquant la page prédéterminée de la seconde version ; et
modifier le mode d'affichage conformément à la position sur laquelle la deuxième opération d'entrée est réalisée.

6. Système de traitement d'informations (1) selon la revendication 5,
dans lequel le processeur est configuré pour :
rendre clair le mode d'affichage de l'image d'aperçu de la page prédéterminée de la première version et flou le mode d'affichage de l'image d'aperçu de la page prédéterminée de la seconde version à mesure que la position sur laquelle la deuxième opération d'entrée est réalisée se rapproche du premier caractère ou symbole de texte ; et
rendre clair le mode d'affichage de l'image d'aperçu de la page prédéterminée de la seconde version et flou le mode d'affichage de l'image d'aperçu de la page prédéterminée de la première version à mesure que la position sur laquelle la deuxième opération d'entrée est réalisée se rapproche du second caractère ou symbole de texte.

7. Système de traitement d'informations (1) selon la revendication 6,
dans lequel le processeur est configuré pour rendre le mode d'affichage clair en réduisant la transparence d'affichage de chacune des images d'aperçu de la page prédéterminée de la première version et de l'image d'aperçu de la page prédéterminée de la seconde version et pour rendre le mode d'affichage flou en augmentant la transparence d'affichage.

8. Système de traitement d'informations (1) selon la revendication 6,
dans lequel un symbole linéaire (R) disposé entre le premier caractère ou symbole de texte et le second caractère ou symbole de texte est affiché dans la région, et la deuxième opération d'entrée est réalisée sur n'importe quelle position du symbole linéaire.

9. Système de traitement d'informations (1) selon la revendication 1,
dans lequel le processeur est configuré pour réaliser une commande comportant la superposition de l'image d'aperçu de la page d'une version actuelle et de l'image d'aperçu de la page d'une version précédemment ouverte conformément à une opération d'entrée réalisée par l'utilisateur, ainsi que l'agrandissement et l'affichage de l'image d'aperçu superposée sur l'affichage, l'image d'aperçu de la page de la version actuelle servant d'image d'aperçu de la page prédéterminée de la première version, l'image d'aperçu de la page de la version précédemment ouverte conformément à l'opération d'entrée réalisée par l'utilisateur servant d'image d'aperçu de la page prédéterminée de la seconde version.

10. Système de traitement d'informations (1) selon la revendication 9,
dans lequel le processeur est configuré pour réaliser une commande comportant la superposition de l'image d'aperçu de la page prédéterminée de la première version et de l'image d'aperçu de la page de la version précédemment ouverte conformément à l'opération d'entrée réalisée par l'utilisateur comme image d'aperçu de la page prédéterminée de la seconde version et l'agrandissement et l'affichage de l'image d'aperçu superposée sur l'affichage lorsqu'une troisième opération d'entrée est réalisée par l'utilisateur.

11. Système de traitement d'informations (1) selon la revendication 1,
dans lequel le processeur est configuré pour réaliser une commande comportant l'agencement de l'image d'aperçu de la page prédéterminée de la première version de l'image d'aperçu de la page prédéterminée de la seconde version côte à côte et l'agrandissement et l'affichage des images d'aperçu sur l'affichage conformément à une quatrième opération d'entrée réalisée par l'utilisateur.

12. Programme qui, lorsqu'il fonctionne sur un ordinateur, amène ce dernier à exécuter un processus, ce processus comprenant :
la réception d'une première opération d'entrée, réalisée par un utilisateur, sélectionnant une image miniature (D) d'un document électronique affiché sur un affichage ;
la réalisation d'une commande comportant l'agrandissement et l'affichage d'une image (G) d'une page prédéterminée incluse dans une ou plusieurs pages constituant le document électronique et d'une image d'unité d'opération (E) sur l'affichage de sorte que l'image de la page prédéterminée et l'image de l'unité d'opération sont affichées dans une taille plus grande que l'image miniature, l'image de l'unité d'opération comportant au moins une image d'opération (B1) pour recevoir une deuxième opération d'entrée pour afficher des images de la page prédéterminée pour différentes versions du document électronique ;
la réception d'une deuxième opération d'entrée réalisée par l'utilisateur sur l'image d'opération ; et
la réalisation d'une commande comportant la superposition d'une image d'aperçu de la page prédéterminée d'une première version et d'une image d'aperçu de la page prédéterminée d'une seconde version, ainsi que l'agrandissement et l'affichage de l'image d'aperçu superposée sur l'affichage dans un mode dans lequel une différence entre les versions est identifiable en faisant varier un mode d'affichage pour chacune des images d'aperçu conformément à la deuxième opération d'entrée réalisée sur l'image d'opération.
